# EUROPEAN PATENT APPLICATION

(11) **EP 4 844 680 A2**
(43) Date of publication of application: **25.11.2026**
(21) Application number: 26205140.2
(22) Date of filing: 15.09.2026
(51) Int. Cl.: G06T 7/00

(54) **ELECTRONIC STAINING METHOD AND SYSTEM RESISTANT TO BLEEDING INTERFERENCE**

(30) Priority: 16.09.2025 CN 202511325714
(71) Applicant: Macrolux Medical Technology Co., Ltd., Shenzhen, Guangdong 518132 (CN)
(72) Inventor: YANG, Zhe, Shenzhen, Guangdong, 518132 (CN); WANG, Cuixiang, Shenzhen, Guangdong, 518132 (CN)
(74) Representative: Viering, Jentschura & Partner mbB Patent- und Rechtsanwälte

(57) **Abstract**

The present application relates to the field of endoscopic imaging technologies, and in particular to an electronic staining method and system resistant to bleeding interference. In this solution, a red channel is extracted from an RGB image of a target region, a weight value of the red channel is determined for each position in the image according to a ratio of the red channel to a blue channel, luminance at each position is compensated according to the weight to obtain a compensated image; and a gradient feature is extracted from the red channel to obtain a red channel gradient map, and the red channel gradient map is superposed with the compensated image to obtain a blood gradient-enhanced image. Through the above solution, the obtained blood gradient-enhanced image may be used for determining a bleeding boundary in the target region with brightness compensated.

## Description

### TECHNICAL FIELD

The present application relates to the field of endoscopic imaging technologies, and in particular, to an electronic staining method and a system resistant to bleeding interference.

### BACKGROUND

Electronic staining technology, as a common endoscopic technique, has been widely used in endoscopic examinations. Its principle mainly utilizes absorption characteristics of tissue for blue-green light, and uses blue and green channels of an original image for combinatorial operations to form an image that emphasizes blood color for display, thereby achieving a blood vessel enhancement effect and assisting physicians in observation.

Conventional electronic staining technologies (such as flexible spectral imaging color enhancement, FICE) mainly rely on blue-green light to enhance mucosal vascular contrast, but have the following defects: blood has a high absorption rate for blue-green light, causing a massive bleeding region to become overall dark due to signal attenuation of the blue and green channels, making it impossible to clearly observe bleeding boundaries. If red light information is added, contrast information tends to decrease, affecting the electronic staining effect. However, simply relying on color space segmentation is susceptible to tissue reflection interference, resulting in a high misjudgment rate.

### SUMMARY

An electronic staining method and a system resistant to bleeding interference provided by the present application effectively solve the problem of poor electronic staining effect in conventional endoscopic detection, which further leads to an inability to clearly observe tissue bleeding boundaries.

According to a first aspect, an embodiment provides an electronic staining method resistant to bleeding interference, including:
acquiring a red-green-blue, RGB, image of a target region, and extracting a red channel from the RGB image;
determining, in the RGB image, a weight value of the red channel at each position according to a ratio of the red channel to a blue channel at the position;
compensating, according to the weight value of the red channel at each position, luminance at the position to obtain a compensated image;
performing extraction of gradient features on the red channel of the RGB image at a plurality of scales to obtain a red channel gradient map, where the gradient features are used for characterizing blood dynamic diffusion information of the target region;
performing weighted superposition of the red channel gradient map and the compensated image to obtain a blood gradient-enhanced image.

In an implementable embodiment, the weight value of the red channel at each position is positively correlated with a ratio of the red channel to the blue channel at the position, and weight values of the blue channel and a green channel at each position are negatively correlated with the ratio of the red channel to the blue channel at the position.

In an implementable embodiment, the step of compensating, according to the weight value of the red channel at each position, the luminance at the position to obtain the compensated image is implemented based on the following compensation formula:
${I}_{compensated} = {ω}_{R} ⋅ R \left(x, y\right) + {ω}_{G} ⋅ G \left(x, y\right) + {ω}_{B} ⋅ B \left(x, y\right) ;$
*I*_{compensated} represents the compensated image, (*x, y*) ∈ the target region, *R*(*x, y*) is a grayscale value of the red channel at the position, *G*(*x*, *y*) is a grayscale value of the green channel at the position, *B*(*x, y*) is a grayscale value of the blue channel at the position, *ω_{R}* represents the weight value of the red channel at the position, *ω_{G}* represents the weight value of the green channel at the position, and *ω_{B}* represents the weight value of the blue channel at the position.

In an implementable embodiment, the performing extraction of the gradient features on the red channel of the RGB image at the plurality of scales to obtain the red channel gradient map includes:
for each scale of the plurality of scales, performing feature extraction on the red channel in the RGB image in at least four feature directions to obtain at least four directional gradient features of the scale;
calculating a weighted sum of the at least four directional gradient features of the scale to obtain a gradient feature corresponding to the scale;
superposing the gradient features of the plurality of scales with a preset weight to calculate a gradient magnitude weighted sum of the plurality of scales, to generate the red channel gradient map, where the plurality of scales includes at least three scales.

In an implementable embodiment, a calculation formula for generating the red channel gradient map is as follows:
${G}_{R} \left(x, y\right) = {\sum }_{θ} ω \left(θ\right) ⋅ \left|\frac{\partial R}{\partial θ}\right| ;$
${G}_{RD} \left(x, y\right) = {\sum }_{D} ω \left(D\right) ⋅ {G}_{R} \left(x, y\right) ;$
*G_{R}*(x,y) represents the gradient feature of each scale, *θ* represents an angle formed by each of the at least four directional gradient features of the scale with a coordinate axis direction, *ω*(*θ*) represents a weight value of the angle *θ*, $\left|\frac{\partial R}{\partial θ}\right|$ is a partial derivative value of a grayscale value of the red channel with respect to the angle *θ*, representing a grayscale change rate of the red channel at the angle *θ*, *D* represents a type of each scale, *ω*(*D*) represents a weight value of the scale, *G_{RD}*(*x*, *y*) is the gradient magnitude weighted sum of the plurality of scales, and *(x, y)* E the target region.

In an implementable embodiment, the performing the weighted superposition of the red channel gradient map and the compensated image to obtain the blood gradient-enhanced image includes:
superimposing the red channel gradient map and the compensated image according to a preset superposition formula to obtain the blood gradient-enhanced image, where the superposition formula is:
${I}_{enhanced} = {I}_{compensated} + α ⋅ {G}_{RD} ;$
*I_{enhanced}* represents the blood gradient-enhanced image, *I*_{compensated} represents the compensated image, *G_{RD}* is the red channel gradient map, and *α* represents a superposition weight of the red channel gradient map.

In an implementable embodiment, the electronic staining method further includes:
calculating, according to a gradient magnitude distribution of the red channel gradient map, a bleeding activity index of a region of interest in the target region, where the bleeding activity index is used for representing a bleeding degree of the region of interest, and the region of interest is at least a part of the target region.

In an implementable embodiment, the bleeding activity index is calculated as follows:
$HAI = \frac{{\sum }_{\left(x, y\right) ∈ ROI} {G}_{RD} \left(x, y\right)}{ROIarea} \times K ;$
HAI represents the bleeding activity index, *ROI* area represents an area of the region of interest, and K represents a preset empirical scaling constant, and (x, y) represents coordinates of a pixel located in the region of interest.

In an implementable embodiment, the electronic staining method further includes:
determining, according to the blood gradient-enhanced image, a boundary of a bleeding region in the target region.

According to a second aspect, an embodiment provides an electronic staining system resistant to bleeding interference, including:
an extraction module, configured to acquire an RGB image of a target region, and extract a red channel from the RGB image;
a weight determination module, configured to determine, in the RGB image, a weight value of the red channel at each position according to a ratio of the red channel to a blue channel at the position;
a luminance compensation module, configured to compensate, according to the weight value of the red channel at each position, luminance at the position to obtain a compensated image;
a feature extraction module, configured to perform extraction of gradient features on the red channel of the RGB image at a plurality of scales to obtain a red channel gradient map, where the gradient features are used for characterizing blood dynamic diffusion information of the target region;
a superposition module, configured to perform weighted superposition of the red channel gradient map and the compensated image to obtain a blood gradient-enhanced image.

According to a third aspect, an embodiment provides a computer-readable storage medium storing a computer program, where the computer program is executable by a processor to implement the method described above.

According to a fourth aspect, an embodiment provides an electronic device, including: a memory, configured to store program code; and a processor, configured to execute the program code to implement the method as described above.

According to the above embodiments of the electronic staining method/system resistant to bleeding interference, after acquiring an RGB image of a target region, a red channel is extracted from the image, and a weight of the red channel at different positions is determined according to an extracted ratio of the red channel to a blue channel at the different positions, and luminance of the RGB image is weight-compensated according to the weight to obtain a compensated image. Meanwhile, a gradient feature is extracted from the red channel to obtain a red channel gradient map, and weighted superposition of the red channel gradient map and the compensated image is performed to obtain a blood gradient-enhanced image. Finally, a bleeding boundary of the target region is determined according to the blood gradient-enhanced image for reference by a physician. By adopting the foregoing solution of the present application, while maintaining clarity of blood vessel structures in conventional electronic staining, it may also compensate, by red gradient, luminance loss of blue and green channels, thereby effectively improving visibility of visual field in massive bleeding scenarios, and thus enabling clear observation of bleeding boundaries.

### BRIEF DESCRIPTION OF THE DRAWINGS

FIG. 1 is a flowchart of an electronic staining method resistant to bleeding interference according to the present embodiment.
FIG. 2 is a structural block diagram of an electronic staining system resistant to bleeding interference according to the present embodiment.

### DETAILED DESCRIPTION OF THE EMBODIMENTS

The present application is described in further detail below through specific embodiments with reference to the accompanying drawings. In different embodiments, similar elements are denoted by related similar element reference numerals. In the following embodiments, numerous details are described to facilitate a better understanding of the present application. However, those skilled in the art may readily recognize that some of the features may be omitted under different circumstances, or may be replaced by other elements, materials, or methods. In some cases, certain operations related to the present application are not shown or described in the specification, so as to avoid obscuring the core part of the present application with excessive description. Those skilled in the art do not need these related operations to be described in detail and may fully understand the related operations from the description in the specification and general technical knowledge in the art.

In addition, characteristics, operations, or features described in the specification may be combined in any appropriate manner to form various embodiments. Meanwhile, the steps or actions in the method descriptions may also be reordered or adjusted in a manner that is apparent to those skilled in the art. Therefore, various sequences in the specification and the accompanying drawings are merely intended to clearly describe a certain embodiment and do not mean that the sequences are mandatory, unless otherwise indicated that a certain order must be followed.

The reference numerals assigned to components in this text, such as "first" and "second", are only used to distinguish the described objects and do not have any order or technical meaning. The terms "connected" and "coupled" in the present application, unless otherwise specified, include both direct and indirect connections (couplings).

An electronic staining method/system resistant to bleeding interference provided in this embodiment achieves enhancement of a bleeding region by fusing blue and green channel contrast and red channel gradient features, and is suitable for endoscopic detection scenarios such as digestive tract, respiratory tract, and in particular may solve problem of excessive darkness in the visual field caused by blue-green light absorption in heavy bleeding scenarios.

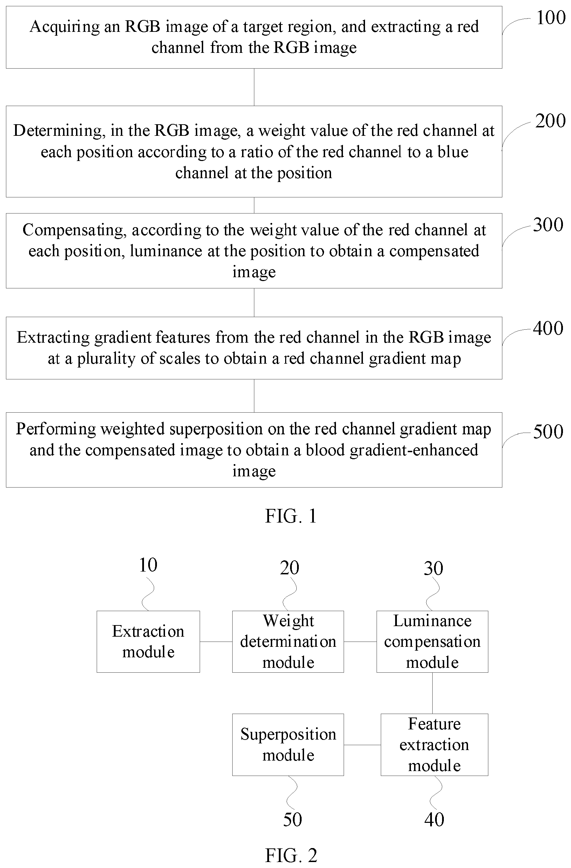

As shown in FIG. 1, an electronic staining method resistant to bleeding interference provided in the present embodiment includes the following steps:
Step 100: acquiring an RGB image of a target region, and extracting a red channel from the RGB image.

In practical application, this step employs an electronic endoscope to acquire the RGB image of the target region. Specifically, an imaging lens and an image sensor are integrated at a front end of a probe of the electronic endoscope, and the image sensor transmits a captured image to an image processing host, and after processing, the image is displayed on a screen for observation by a user. The acquired RGB image retains original contrast information of blue and green channels, which is mainly used to display blood vessel and mucosal structures. In this step, information corresponding to the red channel in the RGB image may be extracted.

Here, the target region refers to a region where tissue to be photographed by the electronic endoscope is located, for example, a region with a high possibility of bleeding, and may be a preset region or a region selected manually by a doctor or the like.

Step 200: determining, in the RGB image, a weight value of the red channel at each position according to a ratio of the red channel to a blue channel at the position.

In a region of massive bleeding, signal attenuation of the blue and green channels causes the image to become overall dark, while a weight of an R component in the RGB image is generally suppressed, making it impossible to clearly observe a bleeding boundary. Therefore, in this step, the region of massive bleeding is preliminarily detected using the ratio of the red channel to the blue channel. The region of massive bleeding usually appears in an RGB image as a distinct red or dark-red tone, which is attributable to absorption and reflection characteristics of hemoglobin in blood for red light. Therefore, signal intensity of the red channel is significantly higher than that of the blue channel, thereby resulting in an increase in the ratio of the red channel to the blue channel, and thus allowing the region of massive bleeding to be preliminarily identified.

Since the ratio of the red channel to the blue channel at different positions is different, the weight value of the red channel at a corresponding position may be dynamically determined by using the ratio of the red channel to the blue channel.

For example, the weight value of the red channel at each position may be positively correlated with a ratio of the red channel to the blue channel at the position, and weight values of the blue channel and a green channel at each position may be negatively correlated with the ratio of the red channel to the blue channel at the position.

In an embodiment of the present application, the different positions may refer to different pixel points in the RGB image, that is, in step 200, all pixel points in the RGB image may be traversed, the ratio of the red channel to the blue channel is calculated for each pixel point, and the weight value of the red channel of a corresponding pixel point is calculated based on the ratio.

In some other embodiments, the different positions may refer to unit regions each covering a preset number of pixel points, for example, each unit region covers 2×2 pixel points. In this case, in step 200, all unit regions in the RGB image may be traversed, the ratio of the red channel to the blue channel is calculated for each unit region (for example, a manner of directly calculating for the unit region as a whole may be adopted, or a manner of calculating for all pixel points in the unit region separately and then averaging may be adopted), and the weight value of the red channel of a corresponding unit region is calculated based on the ratio.

Step 300: compensating, according to the weight value of the red channel at each position, luminance at the position to obtain a compensated image.

Since the signal attenuation of the blue and green channels causes the image to become overall dark, and the weight of the red channel is suppressed. Therefore, in this embodiment, the weight value of the red channel in the RGB image is adaptively increased to compensate the luminance, so as to obtain the compensated image of the RGB image. Specifically, as shown in FIG. 2, the compensation may be implemented by the following steps: reducing weights of the blue channel and a green channel in an attenuation region of the RGB image; and increasing, according to the weight value of the red channel, a contribution value of the red channel in the attenuation region to obtain the compensated image.

Specifically, the attenuation region may be understood as a bleeding region in the target region. In the bleeding region, since hemoglobin is a main pigment component in blood and has different absorption characteristics for light of different wavelengths. In visible-light range, hemoglobin has a relatively strong absorption capacity for both blue light and green light, so that signals of the blue and green channels in the region are attenuated, and therefore, proportions of the blue channel and the green channel in the RGB image of the region are reduced. To ensure the luminance of the image, the weight value of the red channel in the attenuation region in the RGB image may be increased to increase the contribution of the red channel in the attenuation region, so as to obtain the compensated image. Through this embodiment, the luminance of the compensated image may be improved.

In a specific embodiment, the compensation formula for compensating, according to the weight value of the red channel at each position, the luminance at the position is specifically:
${I}_{compensated} = {ω}_{R} ⋅ R \left(x, y\right) + {ω}_{G} ⋅ G \left(x, y\right) + {ω}_{B} ⋅ B \left(x, y\right) ;$
*I*_{compensated} represents the compensated image formed after traversing all positions (x,y) in the target region, (*x, y*) ∈ the target region, for example, (*x, y*) may be coordinates of each pixel point in the target region. *R*(*x, y*) is a grayscale value of the red channel at the position, *G*(*x, y*) is a grayscale value of the green channel at the position, *B*(*x, y*) is a grayscale value of the blue channel at the position, *ω_{R}* represents the weight value of the red channel at the position, *ω_{G}* represents the weight value of the green channel at the position, and *ω_{B}* represents the weight value of the blue channel at the position.

It can be understood that, under a preset imaging condition, as blood-related components in the bleeding region increase, a relative response between the red channel and the blue channel generally changes, and therefore, the ratio of the red channel to the blue channel may be used as one of parameters representing bleeding-related color features. That is, the weight value of the red channel is proportional to a bleeding degree (or referred to as blood concentration). At a position (for example, a pixel point or a unit region), the higher the blood concentration, the higher the proportion of the red channel in the image, and therefore the greater the ratio of the red channel to the blue channel. For a position with a high bleeding degree, a larger superposition weight of the red channel is set to achieve a compensation effect. That is, the bleeding degree may be determined by the ratio of the red channel to the blue channel, and the greater the ratio of the red channel to the blue channel, the greater the bleeding degree. Therefore, the superposition weight of the red channel may be set to be proportional to the ratio of the red channel to the blue channel (that is, the ratio of R/B).

In addition, to ensure overall display effect of the image, *ω_{R} + ω_{B} + ω_{G}* = 1 also needs to be satisfied. Through such processing, problem of low luminance of conventional electronic staining images may be effectively solved.

Step 400: performing extraction of gradient features on the red channel of the RGB image at a plurality of scales to obtain a red channel gradient map, where the gradient features are used for characterizing blood dynamic diffusion information of the target region.

In this step, for example, a sliding window method is used to perform multi-scale directional gradient calculation on the red channel to obtain the red channel gradient map. A specific implementation is as follows: for each scale of the plurality of scales, extracting, by using the sliding window method, a plurality of directional gradient features corresponding to the scale, and superposing the plurality of directional gradient features with a preset weight to obtain a gradient feature corresponding to the scale; and superposing the gradient features of the plurality of scales with a preset weight to generate the red channel gradient map. The plurality of scales may include at least three scales, and for each scale, feature extraction may be performed in at least four feature directions, so as to correspondingly obtain at least four directional gradient features.

In this step, a quantitative analysis is performed on the gradient features of the red channel by using the sliding window, so as to determine a blood-flow diffusion direction (that is, a direction of the steepest gradient descent).

Specifically, the direction of the steepest gradient descent (that is, a negative gradient direction) points to a direction of the most severe grayscale change in the image. For the bleeding region, blood diffusion causes a local grayscale value to change (for example, a red channel value increases or decreases when blood infiltrates tissue). A blood-flow direction corresponds to the direction of the steepest gradient descent (that is, a direction from a high blood concentration region to a low blood concentration region). After gradient calculation is performed on the red channel using the multi-scale gradient operator to generate the multi-scale gradient, the directional gradient feature of each scale of the red channel is extracted using a sliding window method. Specifically, a gradient distribution is calculated within a local window to avoid interference from global noise, and a dominant diffusion direction within the window may also be quantified. In this way, a blood-flow diffusion direction feature in the red channel may be effectively extracted to provide quantitative analysis of a bleeding diffusion path. The directional gradient feature of each scale is then superimposed with the preset weight to generate the red channel gradient map. Since windows of different scales have different sensitivities to bleeding of different ranges, the inclusion of scale information may more accurately determine a bleeding gradient.

As an implementation, a calculation formula for generating the red channel gradient map is as follows:
${G}_{R} \left(x, y\right) = {\sum }_{θ} ω \left(θ\right) ⋅ \left|\frac{\partial R}{\partial θ}\right| ;$
${G}_{RD} \left(x, y\right) = {\sum }_{D} ω \left(D\right) ⋅ {G}_{R} \left(x, y\right) ;$
*G_{R}*(x,y) represents the gradient feature of each scale, *θ* represents an angle formed by each of the at least four directional gradient features of the scale with a coordinate axis direction, *ω*(*θ*) represents a weight value of the angle *θ*, $\left|\frac{\partial R}{\partial θ}\right|$ is a partial derivative value of a grayscale value of the red channel at the coordinate (*x*, *y*) with respect to the angle *θ*, representing a grayscale change rate of the red channel at the angle *θ*, *D* represents a type of each scale (that is, a window size), *ω*(*D*) represents a weight value of each scale (for example, may be a preset constant superposition weight corresponding to the scale), Σ_{D} *ω*(*D*) *= 1. G_{RD}*(*x, y*) is the gradient magnitude weighted sum of the plurality of scales, and *G_{RD}* obtained after traversing all positions in the target region is the red channel gradient map of the entire RGB image. (*x*, *y*) E the target region, that is, (*x*, *y*) represents a coordinate position in the RGB image, for example, (*x*, *y*) may be coordinates of each pixel point in the target region.

During bleeding diffusion, an edge of the bleeding region generates a high gradient value due to a blood concentration gradient or boundary movement. Therefore, the present implementation may effectively highlight a blood diffusion direction by performing the multi-scale directional gradient calculation (for example, using an anisotropic filter) on the red channel. In the foregoing formulas, the greater the blood concentration change, the higher the *G_{R}* value.

Step 500: performing weighted superposition of the red channel gradient map and the compensated image to obtain a blood gradient-enhanced image. Specifically, superimposing the red channel gradient map and the compensated image according to a preset superposition formula to obtain the blood gradient-enhanced image, where the superposition formula is:
${I}_{enhanced} = {I}_{compensated} + α ⋅ {G}_{RD} ;$
*I_{enhanced}* represents the blood gradient-enhanced image, *I*_{compensated} represents the compensated image, *G_{RD}* is the red channel gradient map, *α* serves as a normalization scaling coefficient and represents a superposition weight of the red channel gradient map, and 0 < *α* ≤ 1.

Specifically, by superimposing the red channel gradient map and the compensated image, adaptive gradient fusion may be implemented, thereby obtaining the blood gradient-enhanced image capable of enhancing a bleeding edge. According to the blood gradient-enhanced image, a user may accurately determine the bleeding edge.

Optionally, in some embodiments, the electronic staining method further includes the following step: determining, according to the blood gradient-enhanced image, a bleeding boundary of the target region.

After the bleeding boundary (that is, the edge of the bleeding region) is determined, critical information may be provided for clinical practice through various aspects such as precise localization, quantitative analysis, dynamic monitoring, auxiliary diagnosis and treatment decision-making, multi-modal data fusion, thereby helping to improve diagnosis and treatment effects.

Specifically, after the bleeding boundary is clearly defined, it may help a physician accurately determine a size and a shape of the bleeding region, providing a precise anatomical reference for subsequent treatment. For example, during surgery, the physician may perform hemostasis more precisely based on the localization of the bleeding boundary, thereby reducing damage to surrounding normal tissue. Moreover, by regularly observing changes in the bleeding boundary, such as expansion, contraction, or morphological changes of the boundary, the progression of bleeding may be dynamically monitored, which is crucial for timely adjustment of a treatment plan and prevention of complications. For example, in gastrointestinal bleeding, if the bleeding region continues to expand, it may indicate that the bleeding has not stopped or there is a risk of rebleeding, and intervention measures need to be taken in time.

As a further improvement of the present embodiment, the electronic staining method further includes: calculating, according to a gradient magnitude distribution of the red channel gradient map, a bleeding activity index of a region of interest in the target region, where the bleeding activity index is used for representing a bleeding degree of the region of interest, and according to the bleeding activity index, a region with the highest bleeding degree in the target region may be determined, and then a bleeding source may be determined according to the region with the highest bleeding degree.

In some embodiments, the region of interest may be first determined in the target region, and the bleeding activity index is calculated for the region of interest. Here, the region of interest may be any region in the target region; or the region of interest may be a region with a relatively high bleeding degree in the target region, which is determined by image recognition, manual recognition, or the like. It should be understood that the manner of determining the region of interest is not limited in the present application.

The bleeding activity index is calculated by the following formula:
$HAI = \frac{{\sum }_{\left(x, y\right) ∈ ROI} {G}_{RD} \left(x, y\right)}{ROIarea} \times K ;$
HAI represents the bleeding activity index, *ROI* area represents an area of the region of interest in the target region, and K represents a directional consistency coefficient and is a preset empirical scaling constant, and Σ (_{*x,y)* ∈}*_{ROI} G_{RD}*(*x, y*) represents summing all pixels in the region of interest.

In conventional electronic staining modes, there is a lack of gradient characterization of a dynamic bleeding diffusion path, making it difficult to locate a source. Therefore, after extracting a gradient feature from the red channel and obtaining the red channel gradient map, the present implementation may further calculate a bleeding activity index of the target region according to a distribution of a gradient magnitude of the gradient feature in the red channel gradient map. The bleeding activity index refers to a quantitative index of gradient changes of the red channel in an ROI region (a region of interest). The greater the value of this index, the more significant the gradient change of blood, the higher the bleeding degree, and often the closer it is to a bleeding source. Optionally, after the bleeding source is determined, it may be marked in the image, so that a doctor may formulate targeted intervention measures for the corresponding bleeding site according to the marked position to control bleeding.

Referring to FIG. 2, an electronic staining system resistant to bleeding interference provided in the present embodiment includes an extraction module 10, a weight determination module 20, a luminance compensation module 30, a feature extraction module 40, and a superposition module 50. The extraction module 10 is configured to acquire an RGB image of a target region, and extract a red channel from the RGB image. The weight determination module 20 is configured to determine, in the RGB image, a weight value of the red channel at each position according to a ratio of the red channel to a blue channel at the position. The luminance compensation module 30 is configured to compensate, according to the weight value of the red channel at each position, luminance at the position to obtain a compensated image. The feature extraction module 40 is configured to perform extraction of gradient features on the red channel of the RGB image at a plurality of scales to obtain a red channel gradient map, where the gradient features are used for characterizing blood dynamic diffusion information of the target region. The superposition module 50 is configured to perform weighted superposition of the red channel gradient map and the compensated image to obtain a blood gradient-enhanced image.

Optionally, the electronic staining system may further include a determination module configured to determine, according to the blood gradient-enhanced image, a bleeding boundary of the target region.

In the electronic staining system resistant to bleeding interference provided in this embodiment of the present application, after acquiring an RGB image of a target region, the extraction module 10 extracts a red channel from the image, and the weight determination module 20 determines a weight of the red channel at different positions according to a ratio of the extracted red channel to a blue channel at the different positions, and the luminance compensation module 30 performs weighted compensation on luminance of the RGB image according to the weight to obtain a compensated image. Meanwhile, the feature extraction module 40 extracts a gradient feature from the red channel to obtain a red channel gradient map, and the superposition module 50 then performs weighted superposition of the red channel gradient map and the compensated image to obtain a blood gradient-enhanced image.

By adopting the electronic staining system of the present application, while maintaining clarity of blood vessel structures in conventional electronic staining, it may also compensate, by red gradient, luminance loss of blue and green channels, thereby effectively improving visibility of visual field in massive bleeding scenarios, and thus enabling clear observation of bleeding boundaries.

In view of the fact that the functions and effects and the like corresponding to the extraction module 10, the weight determination module 20, the luminance compensation module 30, the feature extraction module 40, and the superposition module 50 have been described in detail in the above embodiment of the electronic staining method resistant to bleeding interference, this embodiment will not repeat them.

An embodiment of the present application provides an electronic device, including a memory and a processor; the memory is configured to store program code; and the processor is configured to execute the program code to perform the electronic staining method provided in any one of the above embodiments.

A computer-readable storage medium provided in an embodiment of the present application stores a computer program, where the computer program is executable by a processor to implement the electronic staining method described above. Since the electronic staining method resistant to bleeding interference has been described in detail in the foregoing embodiment, the present embodiment will not repeat them in detail.

Those skilled in the art may understand that all or part of the functions of the various methods in the foregoing embodiments may be implemented by hardware or may be implemented by a computer program. When all or part of the functions in the foregoing embodiments are implemented by a computer program, the program may be stored in a computer-readable storage medium. The storage medium may include a read-only memory, a random-access memory, a magnetic disk, an optical disc, a hard disk, or the like, and the above functions are implemented by executing the program by a computer. For example, the program may be stored in a memory of a device, and when the program in the memory is executed by a processor, all or part of the foregoing functions may be implemented. In addition, when all or part of the functions in the foregoing embodiments are implemented by a computer program, the program may also be stored in a storage medium such as a server, another computer, a magnetic disk, an optical disc, a flash drive, or a mobile hard disk, and may be downloaded or copied to and stored in a memory of a local device, or a system of the local device may be updated. When the program in the memory is executed by the processor, all or part of the functions in the foregoing embodiments may be implemented.

The above application of specific examples to illustrate the present application is only for helping to understand the present application, and is not intended to limit the present application. Those skilled in the art to which the present application pertains, several simple deductions, modifications, or substitutions may be made according to the concept of the present application.

## Claims

1. An electronic staining method resistant to bleeding interference, **characterized by**, comprising:
acquiring (100) a red-green-blue, RGB, image of a target region, and extracting a red channel from the RGB image;
determining (200), in the RGB image, a weight value of the red channel at each position according to a ratio of the red channel to a blue channel at the position;
compensating (300), according to the weight value of the red channel at each position, luminance at the position to obtain a compensated image;
performing (400) extraction of gradient features on the red channel of the RGB image at a plurality of scales to obtain a red channel gradient map, wherein the gradient features are used for characterizing blood dynamic diffusion information of the target region; and
performing (500) weighted superposition of the red channel gradient map and the compensated image to obtain a blood gradient-enhanced image.

2. The electronic staining method according to claim 1, wherein the weight value of the red channel at each position is positively correlated with a ratio of the red channel to the blue channel at the position, and weight values of the blue channel and a green channel at each position are negatively correlated with the ratio of the red channel to the blue channel at the position.

3. The electronic staining method according to claim 2, wherein the step of compensating, according to the weight value of the red channel at each position, the luminance at the position to obtain the compensated image is implemented based on the following compensation formula: ${I}_{compensated} = {ω}_{R} ⋅ R \left(x, y\right) + {ω}_{G} ⋅ G \left(x, y\right) + {ω}_{B} ⋅ B \left(x, y\right) ,$ wherein *I*_{compensated} represents the compensated image, (*x, y*) ∈ the target region, *R*(*x, y*) is a grayscale value of the red channel at the position, *G*(*x, y*) is a grayscale value of the green channel at the position, *B*(*x, y*) is a grayscale value of the blue channel at the position, *ω_{R}* represents the weight value of the red channel at the position, *ω_{G}* represents the weight value of the green channel at the position, and *ω_{B}* represents the weight value of the blue channel at the position.

4. The electronic staining method according to any one of claims 1 to 3, wherein the performing extraction of the gradient features on the red channel of the RGB image at the plurality of scales to obtain the red channel gradient map comprises:
for each scale of the plurality of scales, performing feature extraction on the red channel in the RGB image in at least four feature directions to obtain at least four directional gradient features of the scale;
calculating a weighted sum of the at least four directional gradient features of the scale to obtain a gradient feature corresponding to the scale; and
superposing the gradient features of the plurality of scales with a preset weight to calculate a gradient magnitude weighted sum of the plurality of scales, to generate the red channel gradient map, wherein the plurality of scales comprises at least three scales.

5. The electronic staining method according to claim 4, wherein a calculation formula for generating the red channel gradient map is as follows: ${G}_{R} \left(x, y\right) = {\sum }_{θ} ω \left(θ\right) ⋅ \left|\frac{\partial R}{\partial θ}\right| ,$ ${G}_{RD} \left(x, y\right) = {\sum }_{D} ω \left(D\right) ⋅ {G}_{R} \left(x, y\right) ,$ wherein *G_{R}*(x,y) represents the gradient feature of each scale, *θ* represents an angle formed by each of the at least four directional gradient features of the scale with a coordinate axis direction, *ω*(*θ*) represents a weight value of the angle *θ*, $\left|\frac{\partial R}{\partial θ}\right|$ is a partial derivative value of a grayscale value of the red channel with respect to the angle *θ*, representing a grayscale change rate of the red channel at the angle *θ*, *D* represents a type of each scale, *ω*(*D*) represents a weight value of the scale, *G_{RD}*(*x, y*) is the gradient magnitude weighted sum of the plurality of scales, and (*x, y*) E the target region.

6. The electronic staining method according to claim 5, wherein the performing the weighted superposition of the red channel gradient map and the compensated image to obtain the blood gradient-enhanced image comprises:
superimposing the red channel gradient map and the compensated image according to a preset superposition formula to obtain the blood gradient-enhanced image, wherein the superposition formula is: ${I}_{enhanced} = {I}_{compensated} + α ⋅ {G}_{RD} ,$
wherein *I_{enhanced}* represents the blood gradient-enhanced image, *I*_{compensated} represents the compensated image, *G_{RD}* is the red channel gradient map, and *α* represents a superposition weight of the red channel gradient map.

7. The electronic staining method according to claim 5, wherein the method further comprises:
calculating, according to a gradient magnitude distribution of the red channel gradient map, a bleeding activity index of a region of interest in the target region, wherein the bleeding activity index is used for representing a bleeding degree of the region of interest, and the region of interest is at least a part of the target region.

8. The electronic staining method according to claim 7, wherein the bleeding activity index is calculated as follows: $HAI = \frac{{\sum }_{\left(x, y\right) ∈ ROI} {G}_{RD} \left(x, y\right)}{ROIarea} \times K ,$ wherein HAI represents the bleeding activity index, *ROI* area represents an area of the region of interest, and K represents a preset empirical scaling constant, and (x, y) represents coordinates of a pixel located in the region of interest.

9. The electronic staining method according to any one of claims 1 to 8, wherein the method further comprises:
determining, according to the blood gradient-enhanced image, a boundary of a bleeding region in the target region.

10. An electronic device, **characterized by**, comprising:
a memory, configured to store program code; and
a processor, configured to execute the program code to implement the method according to any one of claims 1 to 9.

11. A computer-readable storage medium storing a computer program, wherein the computer program is executable by a processor to implement the electronic staining method resistant to bleeding interference according to any one of claims 1 to 9.
